(19) **Europäisches Patentamt** / **European Patent Office** / **Office européen des brevets**

(11) **EP 2 846 513 B1**

(12) **FASCICULE DE BREVET EUROPEEN**

(45) Date de publication et mention de la délivrance du brevet:
**03.02.2016 Bulletin 2016/05**

(51) Int Cl.:
**H04L 29/06** *(2006.01)*    **H04W 12/06** *(2009.01)*

(21) Numéro de dépôt: **14181803.9**

(22) Date de dépôt: **21.08.2014**

(54) **Procédé de traitement de clés d'authentification dans un système de télécommunications sans fil, et système de télécommunication associé**

Datenverarbeitungsverfahren von Authentifizierungsschlüsseln in einem drahtlosen Telekommunikationssystem, und entsprechendes Telekommunikationssystem

Method for processing authentication keys in a wireless telecommunication system, and related telecommunication system

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.09.2013 FR 1302051**

(43) Date de publication de la demande:
**11.03.2015 Bulletin 2015/11**

(73) Titulaire: **Thales**
**92200 Neuilly Sur Seine (FR)**

(72) Inventeurs:
• **Martinez, Natael**
**78141 Veliyz Cedex (FR)**
• **Klech, Guillaume**
**78141 Velizy Cedex (FR)**
• **Vitry, Christophe**
**78141 Velizy Cedex (FR)**

(74) Mandataire: **Blot, Philippe Robert Emile et al**
**Cabinet Lavoix**
**2, place d'Estienne d'Orves**
**75441 Paris Cedex 09 (FR)**

(56) Documents cités:
**EP-A1- 2 139 175    US-A1- 2011 235 802**

EP 2 846 513 B1

**Description**

La présente invention concerne un procédé de traitement de clés d'authentification dans un système de télécommunications sans fil comprenant des terminaux utilisateurs et un réseau de télécommunication sans fil comprenant au moins un équipement d'authentification et adapté pour mettre en oeuvre des communications avec les terminaux utilisateurs, comprenant les étapes selon lesquelles :

- détermination, en fonction d'une première clé d'authentification du réseau, d'une liste de deuxièmes clés d'authentification du réseau, une deuxième clé d'authentification étant déterminée pour chaque terminal utilisateur du réseau en fonction de la première clé d'authentification du réseau et d'une clé d'authentification dudit terminal utilisateur, chaque deuxième clé d'authentification étant associée, dans la liste, à un identifiant du terminal utilisateur ;
- stockage dans l'équipement d'authentification de ladite liste des deuxièmes clés d'authentification du réseau déterminée ;
- au cours d'une étape d'authentification mise en oeuvre entre un terminal utilisateur et le réseau, le terminal utilisateur reçoit un message comportant des données transmises depuis ledit équipement d'authentification et vérifie qu'une première partie desdites données indique la deuxième clé d'authentification du réseau associée audit terminal.

De nombreux échanges, dans les systèmes de télécommunications sans fil, nécessitent l'utilisation de clés cryptographiques par le réseau et chaque terminal utilisateur, notamment pour mettre en oeuvre les opérations d'authentification entre le terminal utilisateur et le réseau ou encore les opérations de chiffrement des données transmises.

Le document US 2011/0235802 A1 illustre un tel système de télécommunications sans fil.

Dans certains types de systèmes de télécommunications sans fil, une clé respective, dite clé K, connue uniquement par le réseau et le terminal utilisateur considéré, est associée à chaque terminal utilisateur et permet au réseau d'authentifier ce dernier. Une clé respective, dite clé OP, est associée au réseau et permet à chaque terminal utilisateur d'authentifier ce réseau. La compromission de la clé réseau OP permettrait donc une usurpation de l'identité du réseau vis-à-vis des terminaux utilisateurs. C'est pour cette raison que la clé OP d'un réseau n'est pas stockée telle quelle dans les terminaux utilisateurs, ni transmises telle quelle sur les liaisons entre les terminaux utilisateurs et le réseau, mais que la clé OP est stockée et transmise dans les terminaux utilisateurs sous une forme dérivée spécifique à chaque terminal (cette forme spécifique est nommée OPc).

Il existe dans le réseau un équipement de gestion des clés d'authentification, mis en oeuvre dans le processus d'authentification entre le réseau et les terminaux utilisateurs, qui stocke la clé OP d'authentification du réseau et les clés K d'authentification des terminaux et qui est adapté pour générer des clés, notamment les clés d'authentification spécifique du réseau et des clés utilisées pour le chiffrement et l'intégrité des échanges, qui seront ensuite stockées dans les terminaux utilisateurs et utilisées dans les échanges entre le réseau et les terminaux utilisateurs.

Dans les systèmes tels que normés par l'entité 3GPP (en anglais « ETSI 3rd Generation Partnership Project »), par exemple un système 4G LTE, cet équipement est nommé par exemple HSS (il est aussi connu dans d'autres systèmes de télécommunication sous le nom HE, HLR, AuC etc.).

Cet équipement est ainsi un point vulnérable pour la sécurité du système de télécommunication.

Chaque clé K étant spécifique à un terminal utilisateur, sa compromission n'affecterait que le terminal associé. La clé OP étant unique pour l'ensemble du réseau, sa compromission affecterait l'ensemble des utilisateurs du réseau. Si la clé OP d'un réseau devait être changée après le déploiement du réseau, cela impliquerait de reprogrammer l'ensemble des cartes à puce d'identification (USIM) des terminaux utilisateurs du réseau.

Dans une architecture de réseau centralisé classique, cet équipement est unique et centralisé et est usuellement sécurisé par la mise en place d'un pare-feu, un chiffrage du contenu des bases de données qui y sont stockées etc.

En revanche, dans une architecture de réseau distribuée comportant des portions de réseau distantes, autonomes, telles que mises en oeuvre par des forces armées dans une situation de combat pour couvrir les zones courantes d'intervention, dans laquelle une station de base radio est disposée sur chaque zone, le temps de l'intervention, un équipement HSS est disposé auprès de chaque station de base radio. La sécurisation de cet équipement HSS est plus difficile que dans le cas d'un réseau centralisé.

La présence de la clé OP d'authentification du réseau sur ces équipements HSS d'un réseau distribué constitue ainsi un risque pour la sécurité du réseau. Il existe donc un besoin d'accroître la sécurité des systèmes de télécommunication sans fil.

A cet effet, suivant un premier aspect, l'invention propose un procédé de traitement du type précité caractérisé en ce que ladite étape de détermination des deuxièmes clés d'authentification préalable audit stockage desdites deuxièmes clés dans l'équipement d'authentification est effectuée par un outil de génération de clés distant dudit équipement d'authentification.

Un tel procédé permet de diminuer les risques de compromission de la clé d'authentification OP du réseau, notamment lorsque le réseau est de type à architecture distribuée.

Dans des modes de réalisation, le procédé de traitement suivant l'invention comporte en outre une ou plusieurs des caractéristiques suivantes :

- l'outil de génération de clés est non connecté au réseau ;
- l'outil de génération de clés est non connecté au réseau pendant l'opération de détermination des deuxièmes clés d'authentification du réseau et tant que la première clé d'authentification est mémorisée dans une mémoire dudit outil ;
- la première clé d'authentification du réseau est stockée exclusivement à l'extérieur du réseau ;
- le procédé comprend :

  + une étape de stockage sur un support de données desdites deuxièmes clés déterminées par l'outil de génération de clés lors d'une connexion physique dudit support et dudit outil de génération de clés ;
  + une étape d'extraction desdites deuxièmes clés depuis le support à destination d'une base de données du réseau ;

- le réseau comprend une pluralité d'équipements d'authentification, et le procédé comprend les étapes suivantes :

  + stockage dans une base de données du réseau de ladite liste déterminée desdites deuxièmes clés d'authentification du réseau, en association chacune avec un identifiant d'un terminal utilisateur respectif ;
  + transmission depuis ladite base de données, à destination de ladite pluralité d'équipements d'authentification, de ladite liste desdites deuxièmes clés d'authentification du réseau en association chacune avec un identifiant d'un terminal utilisateur respectif, ladite liste étant ensuite stockée dans les équipements d'authentification ;

- le réseau est un réseau à architecture distribuée comportant plusieurs noeuds de réseau aptes à fonctionner de manière autonome et comprenant chacun au moins un équipement d'authentification ; et
- ladite première partie des données transmises est le résultat d'une fonction de la deuxième clé d'identification associée audit terminal et d'un nombre aléatoire déterminé par l'équipement d'authentification, ledit nombre aléatoire étant inclus dans lesdites données transmises par l'équipement d'authentification.

Suivant un deuxième aspect, la présente invention propose un système de télécommunications sans fil comprenant des terminaux utilisateurs, un outil de génération de clés et un réseau de télécommunication sans fil comprenant au moins un équipement d'authentification,

l'outil de génération de clés étant adapté pour déterminer, en fonction d'une première clé d'authentification du réseau, une liste de deuxièmes clés d'authentification du réseau, une deuxième clé d'authentification étant déterminée pour chaque terminal utilisateur du réseau en fonction de la première clé d'authentification du réseau et d'une clé d'authentification dudit terminal utilisateur, chaque deuxième clé d'authentification étant associée, dans la liste, à un identifiant du terminal utilisateur ;
l'équipement d'authentification étant adapté pour stocker dans ladite liste des deuxièmes clés d'authentification du réseau déterminée ;

dans lequel un terminal utilisateur est adapté pour mettre en oeuvre avec le réseau une étape d'authentification au cours de laquelle il reçoit un message comportant des données transmises depuis ledit équipement d'authentification et vérifie qu'une première partie desdites données indique la deuxième clé d'authentification du réseau associée audit terminal ;
ledit système étant caractérisé en ce que ledit outil de génération de clés est distant dudit équipement d'authentification.

Dans des modes de réalisation, le système de télécommunications sans fil suivant l'invention comporte en outre une ou plusieurs des caractéristiques suivantes :

- l'outil de génération de clés est non connecté au réseau ;
- l'outil de génération de clés est adapté pour être non connecté au réseau pendant l'opération de détermination des deuxièmes clés d'authentification du réseau et tant que la première clé d'authentification est mémorisée dans une mémoire dudit outil ;
- la première clé d'authentification du réseau est stockée exclusivement à l'extérieur du réseau ;
- le réseau comporte une base de données, l'outil de génération de clés étant adapté pour stocker sur un support de données lesdites deuxièmes clés déterminées lors d'une connexion physique dudit support et dudit outil de génération de clés, le système comportant en outre un outil d'extraction desdites deuxièmes clés depuis le support à destination d'une base de données du réseau ;
- le réseau comprend une pluralité d'équipements d'authentification et une base de données, ladite base de données étant adaptée pour stocker ladite liste déterminée desdites deuxièmes clés d'authentification du réseau, en association chacune avec un identifiant d'un terminal utilisateur respectif et pour transmettre, à destination de ladite pluralité d'équipements d'authentification, ladite liste desdites deuxièmes clés d'authentification du réseau en association chacune avec un identifiant d'un terminal utilisateur respectif, les équipements d'authentification étant adaptés pour stocker ladite liste transmise desdites deuxièmes clés ;
- le réseau est un réseau à architecture distribuée comportant plusieurs noeuds de réseaux aptes à fonctionner de manière autonome et comprenant chacun au moins un équipement d'authentification ; et
- ladite première partie des données transmises est le résultat d'une fonction de la deuxième clé d'identification associée audit terminal et d'un nombre aléatoire déterminé par l'équipement d'authentification, ledit nombre aléatoire étant inclus dans lesdites données transmises par l'équipement d'authentification.

Ces caractéristiques et avantages de l'invention apparaîtront à la lecture de la description qui va suivre, donnée uniquement à titre d'exemple, et faite en référence aux dessins annexés, sur lesquels :

- la figure 1 représente une vue d'un système de télécommunications sans fil dans un mode de réalisation de l'invention ;
- la figure 2 est un organigramme d'étapes d'un procédé dans un mode de réalisation de l'invention ; et
- la figure 3 est un organigramme d'étapes d'un procédé dans un mode de réalisation de l'invention.

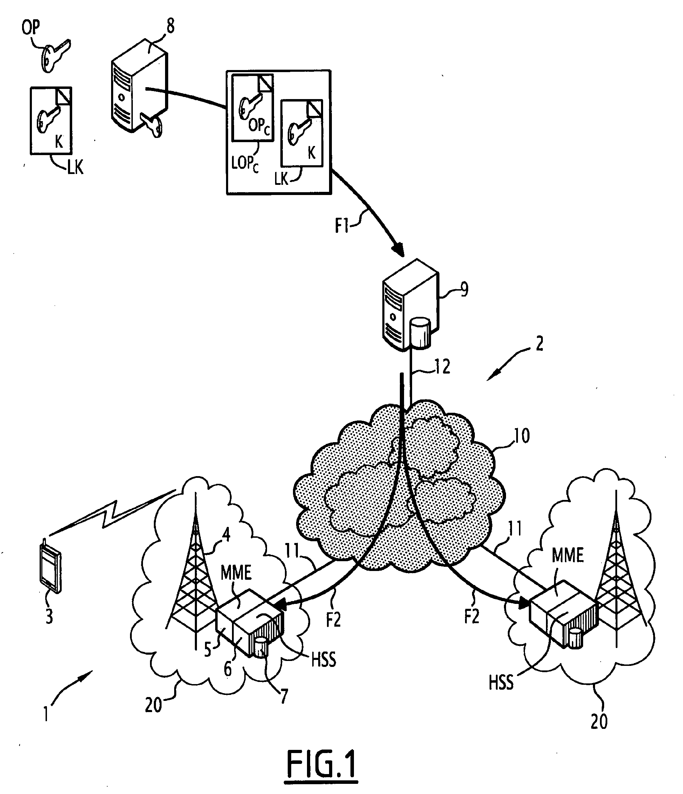

La figure 1 représente une vue d'un système 1 de télécommunication sans fil dans un mode de réalisation de l'invention.

Le système 1 de télécommunications comprend un réseau 2 de télécommunication sans fil, par exemple un réseau LTE (« Long Term Evolution » en anglais) tel que défini par le consortium 3GPP.

Dans le cas considéré, le réseau 2 est à architecture distribuée.

Le réseau 2 comprend dans le cas considéré un coeur de réseau 10 et un ou plusieurs noeuds 20 du même réseau 2.

Un noeud 20 est mis en place notamment pour offrir des capacités de radiocommunication à des utilisateurs du réseau 2 amenés à intervenir dans des zones non couvertes par le coeur 10 de réseau, en cas d'opérations militaires par exemple.

Un noeud 20 doit être capable de fonctionner de façon autonome et d'offrir par lui-même des capacités de télécommunications sans fil selon la norme LTE entre des terminaux utilisateurs 3 situés dans la zone de couverture radio de l'équipement eNodeB 4, sans faire appel au coeur de réseau 10 ou à d'autres noeuds 20 de réseau. A cette fin, chaque noeud 20 comprend au moins un équipement eNodeB 4, ainsi qu'un équipement MME 5 et un équipement HSS 6 comprenant une base de données locale 7.

Un équipement MME (en anglais « Mobile Management Entity ») est adapté notamment pour gérer les sessions de communications des terminaux utilisateurs, met en oeuvre les opérations d'authentification avec les terminaux utilisateurs à l'aide en outre de l'équipement HSS.

Un équipement HSS (en anglais « Home Suscriber Server ») contient la base des terminaux utilisateurs du réseau 2 avec toutes leurs informations d'identification, de configuration et d'authentification. Il est adapté pour contribuer à réaliser l'authentification des utilisateurs au cours d'échanges avec les terminaux utilisateurs via le MME pendant la phase d'authentification. L'interface entre un MME et un HSS est de type S6a.

Un équipement eNodeB (en anglais « evolved Node B ») est un point d'accès radio du réseau 2. Il comprend d'une part un bloc émetteur/récepteur radiofréquence adapté pour assurer la liaison du réseau 2 avec les terminaux utilisateurs, via l'interface LTE-Uu, et est adapté d'autre part pour relayer les données et services entre les terminaux utilisateurs et les équipements du réseau 2, notamment à destination du MME, via l'interface S1-MME.

Chaque noeud 20 comporte en outre un équipement de type S-Gw (Serving Gateway) et un équipement de type PDN-Gw (Packet Data Network Gateway), qui gèrent les flux de données entre les utilisateurs et le reste du réseau. Les tunnels de données sont établis entre l'eNodeB et la S-Gw, puis entre la S-Gw et la PDN-Gw qui transmet ensuite les données au reste du réseau.

Dans des modes de réalisation, un noeud 20 est relié au coeur de réseau 10 par au moins une liaison 11, qui peut être mise en oeuvre de façon permanente ou seulement lors de certaines périodes de temps, par exemple par satellite, afin de permettre des télécommunications entre des terminaux utilisateurs situés dans la zone d'un noeud 20 et des terminaux utilisateurs du réseau 2 situés en-dehors de cette zone.

Le coeur de réseau 10 comporte ainsi les éléments d'interconnexion (routeurs, switchs...) qui permettent de véhiculer les flux de données entre des noeuds 20 distincts du réseau ou vers d'autres éléments du réseau 2 tel que des serveurs d'application ou des passerelles vers internet.

Le réseau 2 comporte en outre une base de données centrale 9. Dans le cas considéré, la base de données 9 est reliée au coeur de réseau 10 par une liaison de télécommunication 12.

Ce système 1 de télécommunication sans fil comprend une pluralité de terminaux utilisateurs 3. Chaque terminal utilisateur 3 est doté d'une carte à puce USIM (en anglais « Universal Subscriber Identity Module ») destinée à stocker de manière sécurisée des éléments sensibles, notamment des clés cryptographiques, affectés à l'utilisateur du terminal utilisateur en tant qu'abonné du réseau 2. Notamment, la clé K associée à chaque terminal utilisateur, qui permet l'authentification de l'utilisateur du terminal (ou l'authentification du terminal utilisateur) par le réseau 2, est stockée dans la carte USIM. Le chargement de la clé K dans la carte USIM a été effectué préalablement par exemple par l'opérateur du réseau 2.

La clé d'origine destinée à permettre l'authentification du réseau 2 par les terminaux utilisateurs est nommée clé OP.

Dans le mode de réalisation considéré, la valeur de chacune des clés K et OP est définie par un ensemble de données à 128 bits.

Le système de télécommunications 1 comporte en outre un dispositif de génération de clés 8, distant des équipements MME 5 et HSS 6 des noeuds 20.

En effet, le fait de ne pas être présent sur les zones géographiques sur lesquelles les noeuds 20 sont implantés permet de limiter la vulnérabilité des équipements de ces noeuds, la clé OP n'y étant pas stockée.

Le dispositif de génération des clés 8 est adapté pour recevoir en entrée la clé OP d'authentification du réseau 2 et la liste LK des clés K associées aux utilisateurs du réseau 2 en correspondance avec un identifiant du terminal utilisateur, par exemple l'IMSI,, et pour générer une clé dérivée d'authentification du réseau OPc pour chaque utilisateur à partir de la clé OP d'authentification du réseau 2 et de la clé K associée à cet utilisateur, en utilisant dans le cas considéré l'algorithme standard dicté par la norme 3GPP et usuellement mis en oeuvre par les HSS :

$$OP_C = OP \oplus E[OP]_K,$$

où $\oplus$ est l'opérateur ou-exclusif binaire (XOR) et $E[x]_y$ est le résultat du chiffrement par bloc de la valeur x en utilisant la clé y en appliquant l'algorithme de Rijndael (cf. norme 3GPP TS 33.102).

Dans un mode de réalisation, le dispositif de génération de clés 8 est isolé du réseau 2, i.e. est non connecté au réseau de télécommunication 2, ceci afin de diminuer les risques de divulgation de la clé OP.

Selon les modes de réalisation, le dispositif de génération de clés 8 est non connecté au réseau de télécommunication 2 de façon permanente, ou au moins pendant l'opération de détermination des clés OPc décrite ci-dessous, tant que la clé OP est mémorisée dans une mémoire du dispositif 8.

Dans un mode de réalisation, la clé OP est stockée exclusivement à l'extérieur du réseau 2.

On notera que la clé OPc associée à un terminal utilisateur et à son utilisateur est stockée en outre dans la mémoire de la carte USIM de chaque terminal utilisateur, préalablement à la mise en service du terminal utilisateur.

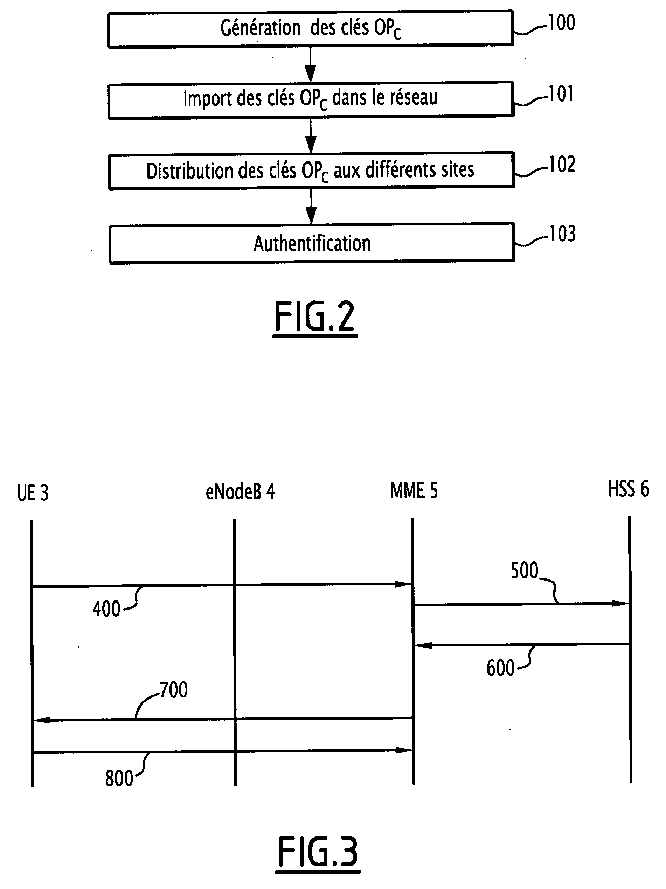

Dans un mode de réalisation de l'invention, les étapes indiquées ci-dessous en référence à la figure 2 sont mises en oeuvre dans une étape d'initialisation du réseau 2 ou d'un noeud 20.

Dans une étape 100, la clé OP d'authentification du réseau 2 et la liste LK des clés K associées aux utilisateurs du réseau 2 sont fournies par l'opérateur du réseau 2 au dispositif de génération des clés 8, qui génère pour chaque utilisateur/terminal utilisateur, à partir de la clé K qui lui est associée, une clé dérivée d'authentification du réseau OPc respective, avec = OP $\oplus$ E[OP]$_K$. L'ensemble des couples (K, OPc) ainsi générés sont stockées dans une liste LOPc.

Dans une étape 101, la liste LK et la liste LOPc ainsi générée relative à l'ensemble des terminaux utilisateurs du réseau 2 sont acheminées de manière sécurisée à destination de la base de données centrale 9, dans laquelle ces listes sont stockées (l'acheminement est représenté sur la figure 1 par la flèche F1).

Dans un mode de réalisation, l'acheminement est réalisé notamment sans mise en oeuvre de liaison de télécommunication entre le dispositif de génération de clés 8 et la base de données centrale 9, mais par exemple à l'aide d'un support amovible de type clé USB, disque de stockage etc. Dans un mode de réalisation, l'acheminement est effectué à l'aide d'un mécanisme d'import de clés via une simple connexion à la base de données centrale 9 depuis le dispositif de génération de clés 8 pour y injecter les clés. Dans une étape 102, la base de données centrale 9 transmet les listes LK et LOPc au HSS 6 de chaque noeud 20, par exemple via le coeur de réseau 10 et les liaisons de communication 11 et 12 (transmission indiquée par les flèches F2 sur la figure 1). Dans un mode de réalisation, cette transmission est sécurisée, par exemple les listes sont transmises sous forme chiffrée et après authentification mutuelle de chaque HSS et de la base de données. Le HSS de chaque noeud 20 stocke ces listes LK et LOPc dans la base de données locale 7.

Dans une étape 103, les opérations d'authentification entre le réseau 2 et les terminaux utilisateurs situés dans une zone de couverture radio d'un eNodeB 4 d'un noeud 20 peuvent alors être mises en oeuvre.

Ainsi un tel procédé permet de limiter les risques de compromission de la clé OP depuis les noeuds 20, fragiles sur le plan de la sécurité du fait que l'accès aux données contenus dans les HSS des noeuds 20 ne peut pas toujours être sécurisé.

A titre d'illustration, un exemple d'opération d'authentification entre le réseau 2 et un terminal utilisateur 3 présent dans la zone de couverture radio associée à un équipement eNodeB d'un noeud 20 est décrit en référence à la figure 3.

En vue de pouvoir échanger des paquets de données IP avec le noeud 20, le terminal utilisateur 3 doit d'abord s'attacher et s'authentifier auprès du réseau 2.

Dans une étape 400, une requête d'attachement/authentification est émise par le terminal utilisateur 3, relayée par le point d'accès radio eNodeB 4 à destination du MME 5, indiquant le numéro IMSI telle que stockée dans la carte USIM du terminal utilisateur 3.

Dans une étape 500, suite à la réception de cette requête, le MME 5 transmet au HSS 6 une requête de données d'authentification indiquant le numéro IMSI. A la réception de cette requête, le HSS6 détermine, en fonction du numéro IMSI indiqué, le couple (K, OPc) de la liste LOPc qui est associé au terminal utilisateur souhaitant s'authentifier.

Le HSS 6 génère alors un nombre aléatoire RAND. Puis il détermine, à l'aide d'une première fonction prédéfinie ayant comme variables les clés K et OPc du couple déterminé et le nombre aléatoire généré RAND, le paramètre d'authentification XRES. XRES correspond au résultat attendu, et sera utilisé, comme indiqué plus bas, pour authentifier le terminal utilisateur 3.

Puis le HSS 6 détermine le paramètre d'authentification AUTN à l'aide d'une deuxième fonction prédéfinie ayant également comme variables les clés K et OPc du couple déterminé et le nombre aléatoire généré RAND. AUTN correspond à un jeton d'authentification qui sera utilisé, comme indiqué plus bas, par le terminal utilisateur 3 pour l'authentification du réseau 2 par le terminal utilisateur 3.

Par ailleurs, le HSS 6 détermine, en fonction également des clés K et OPc du couple déterminé et du nombre aléatoire généré RAND, des clés CK (clé de chiffrement) et IK (clé d'intégrité), à partir desquelles il détermine une clé maîtresse de session, dite $K_{ASME}$ (c'est à partir de cette clé maîtresse de session $K_{ASME}$ que l'ensemble des clés de chiffrement et d'intégrité utilisées pour la session couramment mise en oeuvre via la présente opération d'authentification seront ultérieurement déterminées).

Le HSS 6 transmet au MME 5, dans une étape 600, un vecteur d'authentification AV, où AV = (RAND, XRES, AUTN, $K_{ASME}$). Un vecteur d'authentification distinct est transmis pour chaque nouvelle demande d'authentification.

Suite à la réception de ce vecteur d'authentification, le HSS 6 stocke le vecteur AV en correspondance avec un identifiant du terminal utilisateur 3, puis il génère les clés $K_{NASenc}$, $K_{NASint}$ et $K_{eNB}$ en les dérivant à partir de la clé $K_{ASME}$.

Dans une étape 700, le HSS 6 transmet en outre à l'eNodeB 4 un message indiquant le nombre aléatoire RAND, le jeton d'authentification AUTN et la clé $K_{eNB}$. L'eNodeB 4 en réponse transmet un message au terminal utilisateur 3, indiquant le nombre aléatoire RAND et le jeton d'authentification AUTN reçu.

L'eNodeB 4 détermine à partir de la clé $K_{eNB}$ reçue les clés $K_{UPenc}$, $K_{RRCenc}$, $K_{RRCint}$.

Une fois qu'il a reçu le message transmis par l'eNode B, le terminal utilisateur 3 vérifie si le jeton d'authentification AUTN indiqué dans le message reçu peut être accepté : par exemple, il calcule le résultat de la deuxième fonction prédéfinie ayant également comme variables le nombre aléatoire généré RAND reçu et les clés K et OPc mémorisées dans sa carte USIM et compare ce résultat au jeton AUTN reçu.

Si les valeurs ne sont pas égales, l'authentification est négative et le rattachement du terminal utilisateur 3 au réseau 2 échoue.

Si les valeurs sont égales, le réseau 2 est ainsi authentifié par le terminal utilisateur 3. Le terminal utilisateur 3 calcule alors le paramètre d'authentification RES à l'aide de la première fonction prédéfinie, du nombre aléatoire RAND reçu et des clés K et OPc, ces clés et la première fonction étant mémorisées dans la carte USIM avant sa mise en service initiale.

Dans une étape 800, le paramètre d'authentification RES est transmis par le terminal utilisateur 3, via l'eNodeB 4, au MME 5, qui compare RES et le résultat attendu XRES précédemment calculé par le MME 5 pour ce terminal utilisateur 3.

Si XRES et RES sont égaux, le terminal utilisateur 3 est authentifié.

Si XRES et RES ne sont pas égaux, l'authentification est négative et le rattachement du terminal utilisateur 3 au réseau 2 échoue.

Le terminal utilisateur 3 par ailleurs détermine, en fonction également des clés K et OPc qui lui sont associées et du nombre aléatoire RAND reçu, des clés CK (clé de chiffrement) et IK (clé d'intégrité), à partir desquelles il détermine également la clé maîtresse de session, dite $K_{ASME}$. Il génère les clés $K_{NASenc}$, $K_{NASint}$ et $K_{eNB}$ en les dérivant à partir de cette clé $K_{ASME}$. Puis il détermine, à partir de la clé $K_{eNB}$ ainsi générée, les clés $K_{UPenc}$, $K_{RRCenc}$, $K_{RRCint}$.

Une fois l'authentification mutuelle réussie, un service de radiocommunication peut être fourni au terminal utilisateur 3 par le noeud 20, notamment comprenant la transmission de paquets IP par exemple à destination, et en provenance, d'un autre terminal utilisateur 3 rattaché au noeud 20.

Les clés de session ainsi générées comportent :

$K_{NASenc}$ calculée par le terminal utilisateur 3 et le MME 5 à partir de la clé KASME est utilisée par un algorithme de chiffrement du trafic de signalisation de type NAS (en anglais « Non-access stratum ») ;

$K_{NASint}$ calculée par le terminal utilisateur 3 et le MME 5 à partir de la clé KASME est utilisée par un algorithme de contrôle d'intégrité pour la protection du trafic de signalisation de type NAS ;

$K_{UPenc}$ calculée par le terminal utilisateur 3 et l'eNodeB à partir de la clé $K_{eNB}$ est utilisée par un algorithme de chiffrement de la signalisation RRC ;

$K_{RRCenc}$ calculée par le terminal utilisateur 3 et l'eNodeB à partir de la clé $K_{eNB}$ est utilisée par un algorithme de contrôle d'intégrité de la signalisation RRC.

Il sera mis fin à la session ainsi ouverte lorsque le terminal utilisateur sera déconnecté du réseau 2, ou si un opérateur déclenche la coupure de la session depuis un serveur du coeur de réseau 10 (si le terminal utilisateur a été volé par exemple). Par ailleurs une réauthentification périodique peut être programmée, dans ce cas les mécanismes d'authentification sont relancés à intervalles réguliers. Une nouvelle étape d'authentification mutuelle devra alors être mise en oeuvre et de nouvelles clés de session seront définies.

Ainsi suivant l'invention, les modifications à apporter au fonctionnement usuel tel que défini dans la norme 3GPP portent sur le fait que le HSS ne génère pas les clés OPc et effectue les traitements indiqués par la norme 3 GPP à partir des clés OPc déjà générées.

Des détails sur les échanges décrits ci-dessus usuellement mis en oeuvre dans les réseaux LTE notamment pourront être trouvés notamment dans les documents 3GPP TS 35.206 V11.0.0 ou ETSI TS 133 102 V11.5.1.

L'invention a été décrite ci-dessus dans le cas d'un réseau distribué. Elle peut bien entendu être mise en oeuvre dans un réseau centralisé ou mixte.

## Revendications

1. Procédé de traitement de clés d'authentification dans un système (1) de télécommunications sans fil comprenant des terminaux utilisateurs (3) et un réseau de télécommunication sans fil (2) comprenant au moins un équipement d'authentification (5, 6) et adapté pour mettre en oeuvre des communications avec les terminaux utilisateurs, comprenant les étapes selon lesquelles :

   - détermination, en fonction d'une première clé d'authentification (OP) du réseau, d'une liste (LOPc) de deuxièmes clés d'authentification du réseau (OPc), une deuxième clé d'authentification étant déterminée pour chaque terminal utilisateur du réseau en fonction de la première clé d'authentification du réseau et d'une clé d'authentification (K) dudit terminal utilisateur, chaque deuxième clé d'authentification étant associée, dans la liste, à un identifiant du terminal utilisateur ;
   - stockage dans l'équipement d'authentification de ladite liste des deuxièmes clés d'authentification du réseau déterminée ;
   - au cours d'une étape d'authentification mise en oeuvre entre un terminal utilisateur et le réseau, le terminal utilisateur reçoit un message comportant des données transmises depuis ledit équipement d'authentification et vérifie qu'une première partie desdites données indique la deuxième clé d'authentification du réseau associée audit terminal ;

   ledit procédé étant **caractérisé en ce que** ladite étape de détermination des deuxièmes clés d'authentification (OPc) préalable audit stockage desdites deuxièmes clés dans l'équipement d'authentification (5) est effectuée par un outil de génération de clés (8) distant dudit équipement d'authentification.

2. Procédé de traitement de clés d'authentification selon la revendication 1, selon lequel l'outil de génération de clés (8) est non connecté au réseau.

3. Procédé de traitement de clés d'authentification selon la revendication 1, selon lequel l'outil de génération de clés (8) est non connecté au réseau pendant l'opération de détermination des deuxièmes clés d'authentification (OPc) du réseau et tant que la première clé d'authentification (OP) est mémorisée dans une mémoire dudit outil.

4. Procédé de traitement de clés d'authentification selon la revendication 1, selon lequel la première clé d'authentification (OP) du réseau est stockée exclusivement à l'extérieur du réseau (2).

5. Procédé de traitement de clés d'authentification selon l'une des revendications précédentes, comprenant :

   - une étape de stockage sur un support de données desdites deuxièmes clés déterminées par l'outil de génération de clés (8) lors d'une connexion physique dudit support et dudit outil de génération de clés ;
   - une étape d'extraction desdites deuxièmes clés (OPc) depuis le support à destination d'une base de données (9) du réseau (2).

6. Procédé de traitement de clés d'authentification selon l'une des revendications précédentes, selon lequel le réseau comprend une pluralité d'équipements d'authentification, comprenant les étapes suivantes :

   - stockage dans une base de données (9) du réseau (2) de ladite liste (LOPc) déterminée desdites deuxièmes clés d'authentification du réseau, en association chacune avec un identifiant d'un terminal utilisateur respectif ;
   - transmission depuis ladite base de données, à destination de ladite pluralité d'équipements d'authentification, de ladite liste (LOPc) desdites deuxièmes clés d'authentification du réseau en association chacune avec un identifiant d'un terminal utilisateur respectif, ladite liste étant ensuite stockée dans les équipements d'authentification.

7. Procédé de traitement de clés d'authentification selon la revendication 6, selon lequel le réseau (2) est un réseau à architecture distribuée comportant plusieurs noeuds de réseau (20) aptes à fonctionner de manière autonome et comprenant chacun au moins un équipement d'authentification.

8. Procédé de traitement de clés d'authentification selon l'une des revendications précédentes, selon lequel ladite première partie des données transmises est le résultat d'une fonction de la deuxième clé d'identification associée audit terminal et d'un nombre aléatoire déterminé par l'équipement d'authentification, ledit nombre aléatoire étant inclus dans lesdites données transmises par l'équipement d'authentification.

9. Système de télécommunications sans fil comprenant des terminaux utilisateurs (3), un outil de génération de clés (8) et un réseau de télécommunication sans fil (2) comprenant au moins un équipement d'authentification (5, 6),
l'outil de génération de clés (8) étant adapté pour déterminer, en fonction d'une première clé d'authentification (OP) du réseau, une liste (LOPc) de deuxièmes clés d'authentification du réseau (OPc), une deuxième clé d'authentification étant déterminée pour chaque terminal utilisateur du réseau en fonction de la première clé d'authentification du réseau et d'une clé d'authentification (K) dudit terminal utilisateur, chaque deuxième clé d'authentification étant associée, dans la liste, à un identifiant du terminal utilisateur ;
l'équipement d'authentification étant adapté pour stocker dans ladite liste des deuxièmes clés d'authentification du réseau déterminée ;
dans lequel un terminal utilisateur est adapté pour mettre en oeuvre avec le réseau une étape d'authentification au cours de laquelle il reçoit un message comportant des données transmises depuis ledit équipement d'authentification et vérifie qu'une première partie desdites données indique la deuxième clé d'authentification du réseau associée audit terminal ;
ledit système étant **caractérisé en ce que** ledit outil de génération de clés (8) est distant dudit équipement d'authentification (5,6).

10. Système de télécommunications sans fil selon la revendication 9, dans lequel l'outil de génération de clés (8) est non connecté au réseau.

11. Système de télécommunications sans fil selon la revendication 9, dans lequel l'outil de génération de clés (8) est adapté pour être non connecté au réseau pendant l'opération de détermination des deuxièmes clés d'authentification (OPc) du réseau et tant que la première clé d'authentification (OP) est mémorisée dans une mémoire dudit outil.

12. Système de télécommunications sans fil selon la revendication 9, dans lequel la première clé d'authentification (OP) du réseau est stockée exclusivement à l'extérieur du réseau (2).

13. Système de télécommunications sans fil selon l'une des revendications 9 à 12, dans lequel le réseau 2 comporte une base de données (9),

- l'outil de génération de clés (8) étant adapté pour stocker sur un support de données lesdites deuxièmes clés déterminées lors d'une connexion physique dudit support et dudit outil de génération de clés ;
- le système comportant en outre un outil d'extraction desdites deuxièmes clés (OPc) depuis le support à destination d'une base de données (9) du réseau (2).

14. Système de télécommunications sans fil selon l'une des revendications 9 à 13, dans lequel le réseau comprend une pluralité d'équipements d'authentification et une base de données (9),

- ladite base de données (9) étant adaptée pour stocker ladite liste (LOPc) déterminée desdites deuxièmes clés d'authentification du réseau, en association chacune avec un identifiant d'un terminal utilisateur respectif et pour transmettre, à destination de ladite pluralité d'équipements d'authentification, ladite liste (LOPc) desdites deuxièmes clés d'authentification du réseau en association chacune avec un identifiant d'un terminal utilisateur respectif, les équipements d'authentification étant adaptés pour stocker ladite liste (LOPc) transmise desdites deuxièmes clés.

15. Système de télécommunications sans fil selon la revendication 14, dans lequel le réseau (2) est un réseau à architecture distribuée comportant plusieurs noeuds de réseaux (20) aptes à fonctionner de manière autonome et comprenant chacun au moins un équipement d'authentification.

16. Système de télécommunications sans fil selon l'une des revendications 9 à 15, dans lequel ladite première partie des données transmises est le résultat d'une fonction de la deuxième clé d'identification associée audit terminal et d'un nombre aléatoire déterminé par l'équipement d'authentification, ledit nombre aléatoire étant inclus dans lesdites données transmises par l'équipement d'authentification.

**Patentansprüche**

1. Verfahren zur Verarbeitung von Authentifizierungsschlüsseln in einem System (1) zur drahtlosen Telekommunikation, welches Benutzerterminals (3) und ein Netzwerk zur drahtlosen Telekommunikation (2) aufweist, welches mindestens eine Vorrichtung zur Authentifizierung (5, 6) aufweist, und welches eingerichtet ist, Kommunikationen mit den Benutzerterminals durchzuführen, welches die folgenden Schritte aufweist:

- Bestimmen einer Liste (LOPc) von zweiten Authentifizierungsschlüsseln des Netzwerks (OPc), in Abhängigkeit von einem ersten Authentifizierungsschlüssel (OP) des Netzwerks, wobei ein zweiter Authentifizierungsschlüssel für jedes Benutzerterminal in Abhängigkeit von dem ersten Authentifizierungsschlüssel des Netzwerks und einem Authentifizierungsschlüssel (K) des Benutzerterminals bestimmt ist, wobei jeder zweite Authentifizierungsschlüssel in der Liste mit einer Identifizierung des Benutzerterminals assoziiert ist;
- Speichern der bestimmten Liste der zweiten Authentifizierungsschlüssel des Netzwerks in der Vorrichtung zur Authentifizierung;
- während des Schritts zur Authentifizierung, welche zwischen einem Benutzerterminal und dem Netzwerk durchgeführt wird, Empfangen einer Nachricht durch das Benutzerterminal, welche Daten aufweist, welche von der Vorrichtung zur Authentifizierung übertragen wurden, und Verifizieren durch das Benutzerterminal, dass ein erster Teil der Daten den zweiten Authentifizierungsschlüssel des Netzwerks, welcher mit dem Terminal assoziiert ist, anzeigt;

wobei das Verfahren **dadurch gekennzeichnet ist, dass** der Schritt des Bestimmens der zweiten Authentifizierungsschlüssel (OPc) vor dem Speichern der zweiten Schlüssel in der Vorrichtung zur Authentifizierung (5) durch ein Werkzeug zur Schlüsselgenerierung (8) durchgeführt wird, welches entfernt von der Vorrichtung zur Authentifizierung ist.

2. Verfahren zur Verarbeitung von Authentifizierungsschlüsseln nach Anspruch 1, wobei das Werkzeug zur Schlüsselgenerierung (8) nicht mit dem Netzwerk verbunden ist.

3. Verfahren zur Verarbeitung von Authentifizierungsschlüsseln nach Anspruch 1, wobei das Werkzeug zur Schlüsselgenerierung (8) während des Schritts des Bestimmens der zweiten Authentifizierungsschlüssel (OPc) des Netzwerks und solange der erste Authentifizierungsschlüssel (OP) in einem Speicher des Werkzeugs gespeichert ist, nicht mit dem Netzwerk verbunden ist.

4. Verfahren zur Verarbeitung von Authentifizierungsschlüsseln nach Anspruch 1, wobei der erste Authentifizierungsschlüssel (OP) des Netzwerks ausschließlich außerhalb des Netzwerks (2) gespeichert ist.

5. Verfahren zur Verarbeitung von Authentifizierungsschlüsseln nach einem der vorhergehenden Ansprüche, aufweisend:

- einen Schritt des Speicherns der zweiten Schlüssel auf einem Datenträger, welche durch das Werkzeug zur Schlüsselgenerierung (8) während einer physikalischen Verbindung des Trägers mit dem Werkzeug zur Schlüsselgenerierung bestimmt sind;
- einen Schritt der Extraktion der zweiten Schlüssel (OPc) aus dem Träger zu einer Datenbank (9) des Netzwerks (2).

6. Verfahren zur Verarbeitung von Authentifizierungsschlüsseln nach einem der vorhergehenden Ansprüche, wobei das Netzwerk eine Vielzahl von Vorrichtungen zur Authentifizierung aufweist, welches die folgenden Schritte aufweist:

- Speichern der bestimmten Liste (LOPc) der zweiten Authentifizierungsschlüssel des Netzwerks in Verbindung mit jeweils einer Identifizierung eines jeweiligen Benutzerterminals auf einer Datenbank (9) des Netzwerks (2);
- Übertragen der Liste (LOPc) der zweiten Authentifizierungsschlüssel des Netzwerks in Verbindung mit jeweils einer Identifizierung eines jeweiligen Benutzerterminals der zweiten von der Datenbank zu der Vielzahl von Vorrichtungen zur Authentifizierung, wobei die Liste dann in den Vorrichtungen zur Authentifizierung gespeichert wird.

7. Verfahren zur Verarbeitung von Authentifizierungsschlüsseln nach Anspruch 6, wobei das Netzwerk (2) ein Netzwerk mit verteilter Architektur ist, welches mehrere Netzwerkknoten (20) aufweist, welche geeignet sind, autonom zu arbeiten, und welche jeweils mindestens eine Vorrichtung zur Authentifizierung aufweisen.

8. Verfahren zur Verarbeitung von Authentifizierungsschlüsseln nach einem der vorhergehenden Ansprüche, wobei der erste Teil der übertragenen Daten das Ergebnis einer Funktion des zweiten Authentifizierungsschlüssels, welcher mit dem Terminal assoziiert ist, und einer Zufallszahl ist, welche durch die Vorrichtung zur Authentifizierung bestimmt wurde, wobei die Zufallszahl in den Daten enthalten ist, welche durch die Vorrichtung zur Authentifizierung übermittelt wurden.

9. System zur drahtlosen Telekommunikation aufweisend Benutzerterminals (3), ein Werkzeug zur Schlüsselgenerierung (8) und ein Netzwerk zur drahtlosen Telekommunikation (2), welches mindestens eine Vorrichtung zur Authentifizierung (5, 6) aufweist,

- wobei das Werkzeug zur Schlüsselgenerierung (8) eingerichtet ist, eine Liste (LOPc) von zweiten Authentifizierungsschlüssel des Netzwerks (OPc) in Abhängigkeit von einem ersten Authentifizierungsschlüssel (OP) des Netzwerks zu bestimmen, wobei ein zweiter Authentifizierungsschlüssel für jedes Benutzerterminal des Netzwerks in Abhängigkeit von einem ersten Authentifizierungsschlüssel des Netzwerks und einem Authentifizierungsschlüssel (K) des Benutzerterminals bestimmt ist, wobei jeder zweite Authentifizierungsschlüssel in der Liste mit einer Identifizierung des Benutzerterminals assoziiert ist;

- wobei die Vorrichtung zur Authentifizierung eingerichtet ist, die bestimmte Liste der zweiten Authentifizierungsschlüssel des Netzwerks zu speichern;

- wobei ein Benutzerterminal eingerichtet ist, mit dem Netzwerk einen Schritt der Authentifizierung durchzuführen, während es eine Nachricht empfängt, welche Daten aufweist, welche durch die Vorrichtung zur Authentifizierung übermittelt wurden, und es verifiziert, dass ein erster Teil der Daten den zweiten Authentifizierungsschlüssel des Netzwerks, welcher mit dem Terminal assoziiert ist, anzeigt;

- wobei das System **dadurch gekennzeichnet ist, dass** das Werkzeug zur Schlüsselgeneuerung (8) von der Vorrichtung zur Authentifizierung (5,6) entfernt ist.

10. System zur drahtlosen Telekommunikation nach Anspruch 9, wobei das Werkzeug zur Schlüsselgenerierung (8) nicht mit dem Netzwerk verbunden ist.

11. System zur drahtlosen Telekommunikation nach Anspruch 9, wobei das Werkzeug zur Schlüsselgenerierung (8) eingerichtet ist, während des Schritts des Bestimmens der zweiten Authentifizierungsschlüssel (OPc) des Netzwerks und solange der erste Authentifizierungsschlüssel (OP) in einem Speicher des Werkzeugs gespeichert ist, nicht mit dem Netzwerk verbunden zu sein.

12. System zur drahtlosen Telekommunikation nach Anspruch 9, wobei der erste Authentifizierungsschlüssel (OP) des Netzwerks ausschließlich außerhalb des Netzwerks (2) gespeichert ist.

13. System zur drahtlosen Telekommunikation nach einem der Ansprüche 9 bis 12, wobei das Netzwerk (2) eine Datenbank (9) aufweist,

- wobei das Werkzeug zur Schlüsselgenerierung (8) eingerichtet ist, auf einem Datenträger die zweiten Authentifizierungsschlüssel zu speichern, welche während einer physikalischen Verbindung des Trägers mit dem Werkzeug zur Schlüsselgenerierung bestimmt sind,

- wobei das System zusätzlich ein Werkzeug zur Extraktion der zweiten Schlüssel (OPc) aus dem Träger zu einer Datenbank (9) des Netzwerks (2) aufweist.

14. System zur drahtlosen Telekommunikation nach einem der Ansprüche 9 bis 13, wobei das Netzwerk eine Vielzahl von Vorrichtungen zur Authentifizierung und eine Datenbank (9) aufweist,
wobei die Datenbank (9) eingerichtet ist, die bestimmte Liste (LOPc) der zweiten Authentifizierungsschlüssel des Netzwerks in Verbindung mit jeweils einer Identifizierung eines jeweiligen Benutzerterminals auf einer Datenbank (9) des Netzwerks (2) zu speichern und die bestimmte Liste (LOPc) der zweiten Authentifizierungsschlüssel des Netzwerks in Verbindung mit jeweils einer Identifizierung eines jeweiligen Benutzerterminals auf eine Vielzahl von Vorrichtungen zur Authentifizierung zu übertragen, wobei die Vorrichtungen zur Authentifizierung eingerichtet sind, die übermittelte Liste (LOPc) der zweiten Schlüssel zu speichern.

15. System zur drahtlosen Telekommunikation nach Anspruch 14, wobei das Netzwerk (2) ein Netzwerk mit verteilter Architektur ist, welches mehrere Netzwerkknoten (20) aufweist, welche geeignet sind, autonom zu arbeiten, und welche jeweils mindestens eine Vorrichtung zur Authentifizierung aufweisen.

16. System zur drahtlosen Telekommunikation nach einem der Ansprüche 9 bis 15, wobei der erste Teil der übertragenen Daten das Ergebnis einer Funktion des zweiten Authentifizierungsschlüssels, welcher mit dem Terminal assoziiert ist, und einer Zufallszahl ist, welche durch die Vorrichtung zur Authentifizierung bestimmt wurde, wobei die Zufallszahl in den Daten enthalten ist, welche durch die Vorrichtung zur Authentifizierung übermittelt wurden.

**Claims**

1. A method for processing authentication keys in a wireless telecommunications system (1) comprising user terminals (3) and a wireless telecommunications network (2) comprising at least one piece of authentication equipment (5, 6) and suitable for implementing communications with the user terminals, comprising the following steps:

- using a first authentication key (OP) of the network to determine a list (LOPc) of second authentication keys (OPc) of the network, a second authentication key being determined for each user terminal of the network based on the first authentication key of the network and an authentication key (K) of said user terminal, each second authentication key being associated, in the list, with an identifier of the user terminal;

- storing the said list of the second authentication keys of the determined network in the authentication equipment;

- during the authentication step carried out between a user terminal and the network, the user terminal receives a message including data transmitted from said authentication equipment and verifies that a first part of said data indicates the second authentication key of the network associated with said terminal;

said method being **characterized in that** the step for determining the second authentication keys (OPc) prior to said storage of said second keys in the authentication equipment (5) is done by a key generating tool (8) that is remote with respect to said authentication equipment.

2. The method for processing authentication keys according to claim 1, wherein the key generating tool (8) is not connected to the network.

3. The method for processing authentication keys according to claim 1, wherein the key generating tool (8) is not connected to the network during the operation for determining the second authentication keys (OPc) of the network and as long as the first authentication key (OP) is stored in a memory of said tool.

4. The method for processing authentication keys according to claim 1, wherein the first authentication key (OP) of the network is stored exclusively outside the network (2).

5. The method for processing authentication keys according to one of the preceding claims, comprising:

   - a step for storage on a data medium of said second keys determined by the key generating tool (8) during a physical connection of said medium and said key generating tool;
   - a step for extracting said second keys (OPc) from the medium toward a database (9) of the network (2).

6. The method for processing authentication keys according to one of the preceding claims, wherein the network comprises a plurality of pieces of authentication equipment, comprising the following steps:

   - storing, in a database (9) of the network (2), said determined list (LOPc) of said second authentication keys of the network, each associated with an identifier of a respective user terminal;

   - transmitting, from said database to said plurality of pieces of authentication equipment, said list (LOPc) of the second network authentication keys each associated with an identifier of a respective user terminal, said list next being stored in the authentication equipment.

7. The method for processing authentication keys according to claim 6, wherein the network (2) is a distributed architecture network including several network nodes (20) capable of operating autonomously and each comprising at least one piece of authentication equipment.

8. The method for processing authentication keys according to one of the preceding claims, wherein said first part of the transmitted data is the result of a function of the second identification key associated with said terminal and a random number determined by the authentication equipment, said random number being included in said data transmitted by the authentication equipment.

9. A wireless telecommunications system comprising user terminals (3), a key generating tool (8) and a wireless telecommunications network (2) comprising at least one piece of authentication equipment (5, 6),
the key generating tool (8) being suitable for determining, based on a first authentication key (OP) of the network, a list (LOPc) of second authentication keys of the network (OPc), a second authentication key being determined for each user terminal of the network based on the presence of the first authentication key of the network and an authentication key (K) of said user terminal, each second authentication key being associated, in the list, with an identifier of the user terminal;
the authentication equipment being suitable for storing in said list determined second authentication keys of the network;
wherein a user terminal is suitable for carrying out with the network an authentication step during which it receives a message including data sent from said authentication equipment and verifies that a first part of said data indicates the second authentication key of the network associated with said terminal;
said system being **characterized in that** said key generating tool (8) is remote with respect to said authentication equipment (5, 6).

10. The wireless telecommunications system according to claim 9, wherein the key generating tool (8) is not connected to the network.

11. The wireless telecommunications system according to claim 9, wherein the key generating tool (8) is suitable for not being connected to the network during the operation for determining the second authentication keys (OPc) of the network and as long as the first authentication key (OP) is stored in a memory of said tool.

**12.** The wireless telecommunications system according to claim 9, wherein the first authentication key (OP) of the network is stored exclusively outside the network (2).

**13.** The wireless telecommunications system according to one of claims 9 to 12, wherein the network 2 includes a database (9),

- the key generating tool (8) being suitable for storing on a data medium said second keys determined during a physical connection of said medium and said key generating tool;
- the system further including a tool for extracting said second keys (OPc) from the medium to a database (9) of the network (2).

**14.** The wireless telecommunications system according to one of claims 9 to 13, wherein the network comprises a plurality of pieces of authentication equipment and a database (9),

- said database (9) being suitable for storing said determined list (LOPc) of said second authentication keys of the network, each associated with an identifier of a respective user terminal and for sending, to said plurality of pieces of authentication equipment, said list (LOPc) of said second authentication keys of the network each associated with an identifier of a respective user terminal, the authentication equipment being suitable for storing said transmitted list (LOPc) of said second keys.

**15.** The wireless telecommunications system according to claim 14, wherein the network (2) is a distributed architecture network including several network nodes (20) capable of operating autonomously and each comprising at least one piece of authentication equipment.

**16.** The wireless telecommunications system according to one of claims 9 to 15, wherein said first part of the transmitted data is the result of a function of the second identification key associated with said terminal and a random number determined by the authentication equipment, said random number being included in said data transmitted by the authentication equipment.

**FIG.1**

| | |
|---|---|
| Génération des clés OP$_C$ | —100 |
| Import des clés OP$_C$ dans le réseau | —101 |
| Distribution des clés OP$_C$ aux différents sites | —102 |
| Authentification | —103 |

## FIG.2

UE 3        eNodeB 4        MME 5        HSS 6

400

500

600

700

800

## FIG.3

**EP 2 846 513 B1**

## RÉFÉRENCES CITÉES DANS LA DESCRIPTION

**Documents brevets cités dans la description**

- US 20110235802 A1